# EUROPÄISCHE PATENTSCHRIFT

(11) **EP 0 890 045 B1**
(45) Veröffentlichungstag und Bekanntmachung des Hinweises auf die Patenterteilung: **27.10.1999**
(21) Anmeldenummer: 97916368.0
(22) Anmeldetag: 21.03.1997
(51) Int. Cl.: F16H 61/02

(54) **VERFAHREN ZUM STEUERN EINES WENDEGETRIEBES ZUR REDUZIERUNG DER THERMISCHEN BELASTUNG VON SCHALTELEMENTEN**
GEAR CONTROL METHOD FOR REDUCING THE THERMAL STRESS ON SWITCHING COMPONENTS IN A REVERSING GEAR
COMMANDE DE TRANSMISSION POUR LA REDUCTION DE LA CHARGE THERMIQUE D'ELEMENTS DE CHANGEMENT DE VITESSE D'UNE BOITE D'INVERSION

(30) Priorität: 30.03.1996 DE 19612863
(43) Veröffentlichungstag der Anmeldung: 13.01.1999
(73) Patentinhaber: ZF FRIEDRICHSHAFEN Aktiengesellschaft, 88038 Friedrichshafen (DE)
(72) Erfinder: HEITZ, Uwe, D-88048 Friedrichshafen (DE); BURKHART, Hugo, D-88213 Ravensburg (DE); DREIBHOLZ, Ralf, D-88074 Meckenbeuren (DE)
(86) Internationale Anmeldenummer: EP9701429
(87) Internationale Veröffentlichungsnummer: WO9737157

(56) Entgegenhaltungen:
- EP-A- 0 608 751
- EP-A- 0 708 276
- DE-A- 2 716 531

## Beschreibung

Die Erfindung betrifft ein verfahren zum Steuern eines Wendegetriebes zur Reduzierung der thermischen Belastung von Schaltelementen eines Wendegetriebes für Arbeitsmaschinen.

Bei den aus der Praxis bekannten Wendegetrieben, vor allem der Vorgelegebauweise, in denen zwei oder mehr Schaltelemente zum Schalten eines Ganges verwendet werden und mit welchen ein Fahrzeug in der Lage ist, in gleicher Weise in Vorwärts- und in Rückwärtsfahrtrichtung zu fahren, sind die während des Umschaltens von Vorwärtsfahrt auf Rückwärtsfahrt oder umgekehrt schlupfenden Schaltelemente hohen thermischen Belastungen ausgesetzt. Da die Reversierung üblicherweise nur über ein einziges Schaltelement bzw. eine einzige Wendekupplung durchgeführt wird, muß dieses Schaltelement allein die komplette Verlustleistung bzw. Reibenergie aufnehmen.

Diese hohe thermische Belastung erfordert eine entsprechend robuste Auslegung der Schaltelemente, woraus sich nachteilhafterweise ein größerer Bauraumbedarf und ein höheres Gewicht der Schaltelemente sowie höhere Fertigungskosten ergeben.

Aus der DE 38 12 327 ist ein Doppelkupplungsgetriebe eines Kraftfahrzeuges sowie ein Verfahren zu dessen Einstellung bekannt. Dieses Doppelkupplungsgetriebe weist eine Eingangswelle und eine Ausgangswelle auf, die über stirnradverzahnte und selektiv in Eingriff bringbare Zahnradpaare miteinander verbunden sind. Es sind eine erste Kupplung und eine zweite Kupplung vorgesehen, deren erste Kupplungshälften drehstarr mit der Eingangswelle und deren zweite Kupplungshälften mit einer Welle bzw. einer die Welle umgebenden Hohlwelle verbunden sind. Schaltmittel dienen zum Betätigen der Kupplungen, um den Kraftfluß zwischen Eingangs- und Ausgangswelle in einem Gang über die Kupplung, die Welle, Schaltmuffen und einen ersten Satz Zahnradpaare bzw. einen benachbarten Gang über die zweite Kupplung, die Hohlwelle, Schaltmuffen und einen zweiten Satz Zahnradpaare zu führen. Beim Anfahren des Kraftfahrzeuges werden die zugehörige eine Kupplung und eine zugehörige Schaltmuffe des einen Ganges und gleichzeitig die andere Kupplung und eine Schaltmuffe eines weiteren, der anderen Kupplung zugeordneten Ganges betätigt. Dann, wenn die Ausgangsdrehzahl der Kupplung eines der Gänge deren Eingangsdrehzahl erreicht, wird der Kraftfluß in diesem Gang aufgetrennt.

Dieses bekannte Verfahren bzw. dieses Doppelkupplungsgetriebe bietet eine Möglichkeit zur Reduzierung der thermischen Belastung der Anfahrkupplung bzw. Anfahrkupplungen für ein Doppelkupplungsgetriebe infolge von Reibung.

Zwar bietet dieses vorgeschlagene Verfahren den Vorteil, daß bei einem Doppelkupplungsgetriebe die beim Anfahren in den Reibbelägen erzeugte beträchtliche Energie, welche in Form von Wärme freigesetzt wird, nicht nur von einem Schaltelement aufgenommen werden muß, sondern auf zwei Schaltelemente verteilt wird, jedoch erfolgt die Verteilung gleichmäßig und unabhängig von dem jeweiligen Betriebszustand der Kupplung, wodurch es zu einer Überhitzung einer Kupplung, die beispielsweise bereits größere Verschleißerscheinungen als die andere Kupplung aufweist, kommen kann.

Das Verfahren gemäß der DE 38 12 327 ist bei Doppelkupplungsgetrieben anwendbar, deren Eingangswelle und Ausgangswelle über stirnradverzahnte und in selektiven Eingriff bringbare Zahnradpaare miteinander verbunden sind und dient insbesondere der Reduzierung der Reibbelastung bei extremen Anfahrvorgängen.

Der vorliegenden Erfindung liegt demgemäß die Aufgabe zugrunde, ein Verfahren zum Steuern eines Wendegetriebes dahingehend weiterzubilden, daß bei einem Wendegetrieber der im Oberbegriff von Anspruch 1 genannten Art, vor allem der Vorgelegebauart, eine thermische Überbeanspruchung der bei den Reversierschaltungen, d. h. beim Umschalten von Vorwärtsfahrt auf Rückwärtsfahrt oder umgekehrt, beteiligten Schaltelemente verhindert wird.

Diese Aufgabe wird durch die im Anspruch 1 genannten Maßnahmen gelöst.

Das erfindungsgemäße Verfahren ermöglicht es die thermische Belastung infolge der Reibarbeit an den Schaltelementen gezielt zwischen den am Schaltvorgang beteiligten Schaltelementen aufzuteilen, wodurch diese eine längere Lebensdauer erhalten oder kleiner dimensioniert werden können, ohne durch zu große Reibbelastung überhitzt zu werden.

Dies bringt den Vorteil, daß der Bauraumbedarf, die Kosten und das Gewicht dieser Schaltelemente erheblich reduziert werden können.

Mit der Reduzierung der Reibleistung und Reibenergie in den Schaltelementen bzw. Wendekupplungen ergibt sich des weiteren der Vorteil, daß die Schaltzeit verkürzt werden kann.

Das erfindungsgemäße Verfahren bietet außerdem den Vorteil, daß die Alterung des Öles, welches bei hydraulischen Schaltungen verwendet wird, verlangsamt wird, womit ein Auswechseln des Getriebeöles nur noch in größeren Zeitintervallen erforderlich ist. Damit können vorteilhafterweise Betriebskosten eingespart werden.

Weitere Vorteile und vorteilhafte Weiterbildungen der Erfindung ergeben sich aus den Unteransprüchen und aus dem nachfolgend unter Hinweis auf die beigefügte Zeichnung näher beschriebenen Ausführungsbeispiel. Es zeigt:
- Fig. 1: eine äußerst schematisierte Prinzipdarstellung eines Wendegetriebes zur Erläuterung der erfindungsgemäßen Getriebesteuerung bzw. deren Wirkungsweise und
- Fig. 2: eine äußerst schematisierte Prinzipdarstellung einer erfindungsgemäßen Getriebesteuerung zur Erläuterung von deren Wirkungsweise.

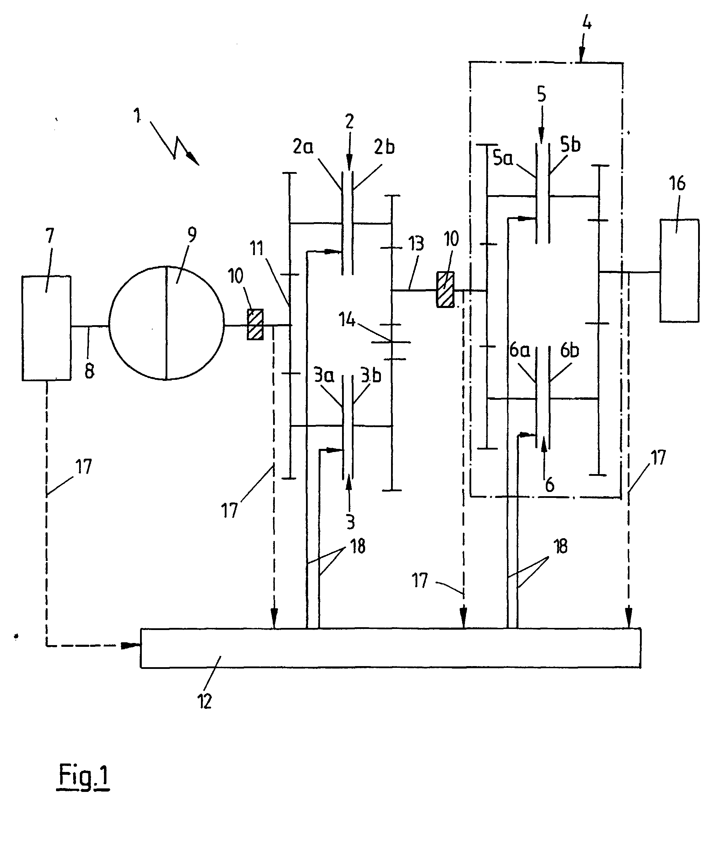

Bezugnehmend auf Fig. 1 ist mit 1 ein Wendegetriebe angedeutet, wie es in Arbeitsmaschinen, wie z. B. Radladern, verwendet wird. Das Wendegetriebe 1 weist ein Reversierschaltelement zur Vorwärtsfahrt 2 und ein Reversierschaltelement zur Rückwärtsfahrt 3 auf.

Mit 4 ist in Fig. 1 eine den Reversierschaltelementen 2, 3 nachgeschaltete, lastschaltbare Ganggruppe mit Schaltelementen 5 und 6, die jeweils einem Gang zugeordnet sind, bezeichnet.

Die Reversierschaltelemente 2 und 3 sowie die Schaltelemente 5 und 6 sind jeweils als Reibkupplungen mit je zwei Kupplungshälften 2A, 2B, 3A, 3B, 5A, 5B, 6A, 6B ausgeführt.

In dem dargestellten Ausführungsbeispiel ist mit 7 äußerst schematisiert ein Motor angedeutet, welcher eine Eingangswelle 8 des Wendegetriebes 1 antreibt, wobei die Eingangswelle 8 mit einem Wandler 9 verbunden ist, welcher zum Anfahren dient und ein erhöhtes Drehmoment aufbaut, welches von den Schaltelementen 2, 3, 5, 6 aufgenommen werden muß. Über den Wandler 9, eine zwischengeschaltete Masse 10 und ein Zahnrad 11 wird der Kraftfluß von der Eingangswelle 8 auf die jeweils erste Kupplungshälfte 2A, 3A der Reversierschaltelemente 2, 3 übertragen. Die als Reibkupplungen bzw. Wendekupplungen ausgebildeten Reversierschaltelemente 2, 3 können unter Last geschaltet werden, womit bei derartigen Wendegetrieben während der Fahrt von Vorwärtsfahrt auf Rückwärtsfahrt oder umgekehrt umgeschaltet werden kann.

Wird z. B. vom Fahrer ein Fahrtrichtungshebel (nicht dargestellt) umgelegt und damit von Vorwärtsfahrt auf Rückwärtsfahrt oder umgekehrt geschaltet, werden über eine Regel- und Steuereinheit 12 die mit Druck beaufschlagbaren Schaltelemente 2, 3, 5, 6 derart angesteuert, daß von bestimmten Kupplungen Druck abgeschaltet wird und andere Kupplungen mit Druck beaufschlagt werden.

Während dieses Schaltvorganges befindet sich ebenfalls der Wandler 9 im Eingriff, welcher in Abhängigkeit von einer Wandlereingangs- und Wandlerausgangsdrehzahl ein Wandlereingangs- und Wandlerausgangsmoment erzeugt, und damit zusätzlich beim Reversieren einen Teil der Reversierenergie bzw. Reibenergie aufnimmt.

Um zu verhindern, daß die gesamte Reibbelastung auf einer der Reversierkupplungen 2 oder 3 liegt, und zur Reduzierung der thermischen Belastung der Schaltelemente 2, 3, 5, 6 werden diese Schaltelemente von der Regel- und Steuereinheit 12 elektrisch und hydraulisch derart angesteuert, daß bei einem Wende-Schaltvorgang zusätzlich zu einem der Reversierschaltelemente 2, 3 entsprechend dem Schaltvorgang von Vorwärtsfahrt auf Rückwärtsfahrt oder umgekehrt ein weiteres der im Leistungsfluß liegenden Schaltelemente 5 oder 6 der nachgeschalteten Ganggruppe 4 in einen Rutschzustand gebracht werden. Hierzu wird der Druck in einem der beteiligten Schaltelemente 5 oder 6, welches bereits bei Beginn der Reversierung geschlossen bzw. geschaltet war, erst völlig von Druck entlastet, um anschließend wieder mit Druck beaufschlagt zu werden. Damit kann dieses zusätzliche Schaltelement 5 oder 6 ebenfalls Reibarbeit übernehmen. Der Druckverlauf bei der Druckbeaufschlagung dieses Schaltelementes 5 oder 6 verläuft dabei rampenförmig ansteigend.

Je nach Fahrtrichtungswahl wird der Kraftfluß von einer der Kupplungshälften 2A oder 3A des Reversierschaltelementes 2 oder 3 über eine der Kupplungshälften 2B oder 3B zu einer Zwischenwelle 13, an der ebenfalls eine Masse 10 angeordnet ist, und von dieser auf die nachgeschaltete Ganggruppe 4 übertragen. Dabei ist zwischen der zweiten Kupplungshälfte 3B des Reversierschaltelementes 3 und der Zwischenwelle 13 ein Zwischenrad 14 aufgrund der Drehrichtungsumkehr angeordnet.

Von der Zwischenwelle 13 wird der Kraftfluß auf die erste Kupplungshälfte 5A bzw. 6A der Schaltelemente 5 bzw. 6 übertragen, und von dort, je nach Schaltstellung, alternativ über die zweite Kupplungshälfte 5B oder die zweite Kupplungshälfte 6B auf eine Abtriebswelle 15, welche zu einem äußerst schematisch dargestellten Abtrieb 16 führt.

Selbstverständlich ist anstelle der Ganggruppe 4 mit den Schaltelementen 5 und 6 alternativ auch eine Ganggruppe mit einer größeren Anzahl an nachgeschalteten Schaltelementen möglich.

Im folgenden wird zur Erläuterung der Getriebesteuerung ein Schaltablauf einer Reversierschaltung von Vorwärtsfahrt auf Rückwärtsfahrt beschrieben, d. h., daß während der Fahrt von dem Reversierschaltelement 2 auf das Reversierschaltelement 3 umgeschaltet wird. Dabei wird beispielsweise davon ausgegangen, daß zu Beginn der Reversierung, d. h. im Zustand der Vorwärtsfahrt, das Schaltelement 6 geschlossen ist. Während des Reversierens ist das Schaltelement 5, wie auch bei den aus dem Stand der Technik bekannten Wendeschaltungen, geöffnet, und zusätzlich wird nun in völliger Abkehr zu bekannten Wendeschaltungen das Schaltelement 6, welches zu Beginn der Reversierung geschlossen war, zusätzlich zu dem Reversierschaltelement 3 zur Rückwärtsfahrt ins Rutschen gebracht. Damit wird die Reibleistung, welche bei der Schaltung entsteht, zwischen dem Reversierschaltelement 3 und dem zusätzlich ins Rutschen gebrachten Schaltelement 6 aufgeteilt, so daß eine thermische Überbeanspruchung des Reversierschaltelementes 3 vermieden wird.

Grundsätzlich wird immer dasjenige der nachgeschalteten Schaltelemente 5, 6, deren Anzahl bei anderen Ausführungen gegebenenfalls auch höher sein kann, ins Rutschen gebracht, welches bei Beginn der Reversierschaltung geschlossen war.

An den Schaltelementen 2, 3, 5, 6 werden deren Differenzdrehzahlen Δn2, Δn3, Δn5, Δn6 zu jedem Zeitpunkt durch Messung oder Berechnung ermittelt. Hierzu ist in dem Wendegetriebe 1 eine nicht näher dargestellte Sensorik vorgesehen, welche Betriebszustandsdaten, wie z. B. Drehzahl und Temperatur, unter anderem an den Wellen 8, 13 und 15 sowie an den Schaltelementen 2, 3, 5 und 6, am Motor 7 und am Abtrieb 16 erfaßt, und diese an die Regel- und Steuereinheit 12 weiterleitet, was in Fig. 1 durch einige beispielhafte Pfeile 17, welche Datenleitungen symbolisieren, dargestellt ist.

Über eine nicht näher dargestellte, der Regel- und Steuereinheit 12 zugeordnete Elektronik, werden die Differenzdrehzahlen zwischen dem aktivierten Reversierschaltelement und dem zusätzlich geschalteten Schaltelement 5 oder 6 geregelt.

Die Schaltelemente 2, 3, 5 und 6 sind mit unterschiedlich starkem Druck ansteuerbar bzw. betätigbar, wobei die Ansteuerung der beteiligten Bauteile, insbesondere der Schaltelemente 2, 3, 5, 6, durch die Regel- und Steuereinheit 12 in Fig. 1 durch einige beispielhafte Pfeile 18 angedeutet ist.

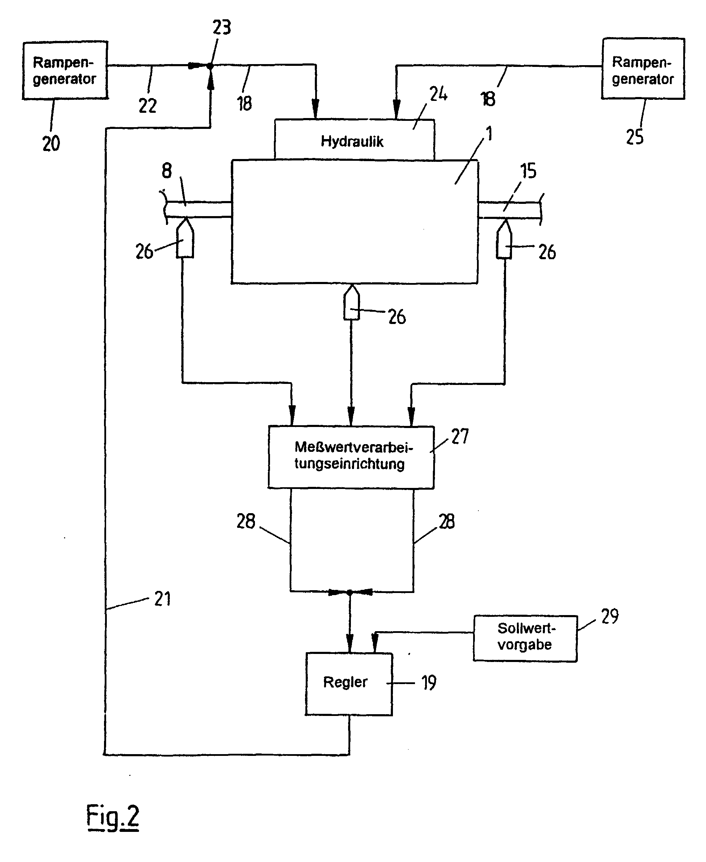

Bezug nehmend auf Fig. 2 soll die Funktionsweise der Getriebesteuerung des Wendegetriebes 1 näher erläutert werden. Dabei wird wieder wie zuvor der Schaltablauf von Vorwärtsfahrt auf Rückwärtsfahrt mit den rutschenden Schaltelementen 3 und 6 betrachtet.

Der Druck an einem der Reversierschaltelemente 2, 3 gemäß Fig. 1 wird bei dem Schaltvorgang über einen gesteuerten und einen geregelten Anteil eingestellt.

Wie Fig. 2 zu entnehmen ist, wird der Regelanteil von einem Regler 19 und der Steueranteil von einem schematisch dargestellten Rampengenerator 20 eingestellt, wobei sich eine von dem Regler 19 kommende, prinzipmäßig dargestellte Leitung 21 und eine von dem Rampengenerator 20 kommende Steuerleitung 22 an einer Schnittstelle 23 schneiden, von welcher aus der Regel- und Steueranteil über eine Befehlsleitung 18 an eine mit 24 bezeichnete, schematisch dargestellte Hydraulik gegeben wird, welche die Reversierschaltelemente 2, 3 gemäß Fig. 1 mit Druck beaufschlagt. Die Schaltelemente 2, 3 der nachgeschalteten Ganggruppe 4 werden über einen in Fig. 2 schematisch dargestellten Rampengenerator 25, welcher einen rampenförmigen Druckverlauf vorgibt, gesteuert.

Bei dem konkret geschilderten Schaltvorgang wird somit der Druck an dem Reversierschaltelement 3, welcher aus einem Steuer- und Regelanteil zusammengesetzt ist, über die Befehlsleitung 18 eingestellt, während der Druck an dem zusätzlich rutschenden Schaltelement 6 ebenfalls über eine Befehlsleitung 18 eingestellt wird. Der Druck an dem der Abtriebswelle 15 zugewandten Schaltelement 6 ist somit ein rein gesteuerter Druck, der über eine zeitabhängige Druckrampe vorgegeben wird.

Über Drehzahlaufnehmer 26 werden an der Eingangswelle 8, an der Abtriebswelle 15 sowie an den Schaltelementen 2, 3, 5, 6 jeweils die Drehzahl von einem Drehzahlaufnehmer 26 gemessen. Die in Fig. 2 dargestellten Drehzahlmesser 26 entsprechen jedoch nicht der tatsächlichen Anzahl der Drehzahlaufnehmer, sondern stehen lediglich symbolisch für eine größere Anzahl an Drehzahlaufnehmern. Die von den Drehzahlaufnehmern 26 ermittelten Drehzahlen werden an eine Meßwertverarbeitungseinrichtung 27 weitergeleitet, welche die Differenzdrehzahlen Δn3, Δn6 an den rutschenden Schaltelementen, im vorliegenden Falle an dem Reversierschaltelement 3 und an dem Schaltelement 6, ermitteln. Beide Differenzdrehzahlen sollen während der gesamten Reversierphase gleich sein. Über Leitungen 28 gehen die ermittelten Differenzdrehzahlen Δn6 und Δn3 an dem Regler 19 ein, wo sie mit einem Sollwert für die Differenz zwischen den Differenzdrehzahlen, welcher mit Null eingestellt wird, verglichen werden. In Fig. 2 ist die Sollwertvorgabe mit 29 symbolisch dargestellt. Der Sollwert Null entspricht dabei einer Gleichverteilung der Reibbelastung zwischen den beteiligten Schaltelementen 3 und 6. Aus der eventuell auftretenden Differenz der Differenzdrehzahlen Δn6 und Δn3 der beiden rutschenden Schaltelemente 6 und 3 ermittelt der Regler 19 die Regelgröße, welche an das Reversierschaltelement 3 weitergegeben wird. Ist die Differenz zwischen den Differenzdrehzahlen Δn6 und Δn3 gleich Null, so wird der Regler 19 nicht aktiviert, ist die Differenz hingegen ungleich Null, wird eine entsprechende Regelgröße an das Reversierschaltelement 6 von dem Regler 19 ausgegeben.

Bei dem geschilderten Reversiervorgang wird davon ausgegangen, daß die beiden rutschenden Schaltelemente 3 und 6 mit gleicher Reiblast belastet werden sollen, wie es der Normalfall ist. Wenn jedoch eine unterschiedliche Reibbelastung der beteiligten Schaltelemente 3 und 6 erwünscht ist, beispielsweise infolge unterschiedlicher Verschleißerscheinungen an den Schaltelementen, kann durch einen von Null abweichenden Sollwert die Belastung zwischen den Schaltelementen 3, 6 gezielt ungleich verteilt werden. Damit kann die Reibbelastung individuell der thermischen Belastbarkeit der Schaltelemente angepaßt werden.

### Bezugszeichen

- 1: Wendegetriebe
- 2: Reversierschaltelement
- 2A: Kupplungshälfte
- 2B: Kupplungshälfte
- 3: Reversierschaltelement
- 3A: Kupplungshälfte
- 3B: Kupplungshälfte
- 4: nachgeschaltete Ganggruppe
- 5: Schaltelement
- 5A: Kupplungshälfte
- 5B: Kupplungshälfte
- 6: Schaltelement
- 6A: Kupplungshälfte
- 6B: Kupplungshälfte
- 7: Motor
- 8: Eingangswelle
- 9: Wandler
- 10: Masse
- 11: Zahnrad
- 12: Regel- und Steuereinheit
- 13: Zwischenwelle
- 14: Zwischenrad
- 15: Abtriebswelle
- 16: Abtrieb
- 17: Datenleitung
- 18: Befehlsleitung
- 19: Regler
- 20: Rampengenerator
- 21: Leitung
- 22: Leitung
- 23: Schnittstelle
- 24: Hydraulik
- 25: Rampengenerator
- 26: Drehzahlaufnehmer
- 27: Meßwertverarbeitungseinrichtung
- 28: Leitung
- 29: Sollwertvorgabe

## Patentansprüche

1. Verfahren zum Steuern eines Wendegetriebes für Arbeitsmaschinen, wobei das Wendegetriebe eine Eingangswelle (8) und eine Abtriebewelle (15), wenigstens ein Reversierschaltelement (2) zur Vorwärtsfahrt und ein Reversierschaltelement (3) zur Rückwärtsfahrt sowie eine nachgeschaltete, lastschaltbare Ganggruppe (4) mit mehreren Schaltelementen (5, 6), die jeweils einem Gang zugeordnet sind, aufweist,
dadurch gekennzeichnet,
daß zur Reduzierung der thermischen Belastung der Schaltelemente (2, 3, 5, 6) des Wendegetriebes (1) die Reversierschaltelemente (2, 3) von einer Regel- und Steuereinheit (12) elektrisch und/oder hydraulisch derart angesteuert werden, daß bei einem Schaltvorgang zusätzlich zu einem der Reversierschaltelemente (2, 3) entsprechend dem Schaltvorgang wenigstens ein weiteres, im Leistungsfluß liegendes, bei Beginn einer Reversierung geschlossenes Schaltelement (5, 6) der nachgeschalteten Ganggruppe (4) in einen Reib- bzw. Rutschzustand geschaltet wird, und eine dabei entstehende Reibbelastung zwischen dem Reversierschaltelement (2, 3) und dem weiteren, rutschenden Schaltelement (5, 6) aufgeteilt wird.

2. Verfahren zum Steuern eines Wendegetriebes nach Anspruch 1, dadurch **gekennzeichnet**, daß die Reversierschaltelemente (2, 3) und Schaltelemente (5, 6) der nachgeschalteten Ganggruppe (4) zum Schalten mit Druck beaufschlagbar sind.

3. Verfahren zum Steuern eines Wendegetriebes nach Anspruch 1 und 2, dadurch **gekennzeichnet**, daß bei dem Schaltvorgang der Druck an den Reversierschaltelementen (2, 3) über einen gesteuerten und einen geregelten Anteil einstellbar ist.

4. Verfahren zum Steuern eines Wendegetriebes nach einem der Ansprüche 1 bis 3, dadurch **gekennzeichnet**, daß als Regelgröße für den geregelten Anteil des Druckes des an dem Schaltvorgang beteiligten Reversierschaltelementes (2, 3) die Differenz der Differenzdrehzahlen Δn2, Δn3, Δn5, Δn6 eines der Reversierschaltelemente (2, 3) und des zusätzlich in einen Rutschzustand geschalteten Schaltelementes (5, 6) der nachgeschalteten Ganggruppe (4) dient.

5. Verfahren zum Steuern eines Wendegetriebes nach Anspruch 4, dadurch **gekennzeichnet**, daß für einen Normalbetrieb ein Sollwert für die Differenz der Differenzdrehzahlen Δn2, Δn3, Δn4, Δn5, Δn6 von Null eingestellt ist.

6. Verfahren zum Steuern eines Wendegetriebes nach einem der Ansprüche 1 bis 5, dadurch **gekennzeichnet**, daß über das Einstellen eines von Null abweichenden Sollwertes für die Differenz der Differenzdrehzahlen Δn2, Δn3, Δn5, Δn6 die Reibbelastung gezielt zwischen den Schaltelementen (2, 3, 5, 6) verteilbar ist.

7. Verfahren zum Steuern eines Wendegetriebes nach einem der Ansprüche 1 bis 6, dadurch **gekennzeichnet**, daß ein zeitabhängiger, rampenförmiger Verlauf des Druckes an dem zusätzlich rutschenden Schaltelement (5, 6) der nachgestalteten Ganggruppe (4) vorgebbar ist.

## Claims

1. Method for controlling a reversing gear unit for working machines, wherein the reversing gear unit comprises an input shaft (8) and a driven shaft (15), at least one reversing shift element (2) for forward travel and a reversing shift element (3) for reverse travel, as well as a downstream change-under-load gear group (4) with a plurality of shift elements (5, 6), each of which is associated with a gear,
characterised in that,
in order to reduce the thermal load on the shift elements (2, 3, 5, 6) of the reversing gear unit (1), the reversing shift elements (2, 3) are electrically and/or hydraulically actuated by a regulating and control unit (12) such that, when a shifting operation takes place, in addition to one of the reversing shift elements (2, 3), according to the shifting operation, at least one further shift element (5, 6), lying in the power flow and engaged at the beginning of reversing, of the downstream gear group (4) is shifted into a frictional or slipping state, and a resulting frictional load is divided between the reversing shift element (2, 3) and the further, slipping shift element (5, 6).

2. Method for controlling a reversing gear unit according to claim 1, characterised in that pressure can be applied to the reversing shift elements (2, 3) and shift elements (5, 6) of the downstream gear group (4) for shifting purposes.

3. Method for controlling a reversing gear unit according to claims 1 and 2, characterised in that the pressure at the reversing shift elements (2, 3) can be set via a controlled and a regulated component when the shifting operation takes place.

4. Method for controlling a reversing gear unit according to any one of claims 1 to 3, characterised in that the difference in the differential speeds Δn2, Δn3, Δn5, Δn6 of one of the reversing shift elements (2, 3) and the shift element (5, 6), which has additionally been shifted into a slipping state, of the downstream gear group (4) serves as control variable for the regulated component of the pressure on the reversing shift element (2, 3) involved in the shifting operation.

5. Method for controlling a reversing gear unit according to claim 4, characterised in that a desired value for the difference in the differential speeds Δn2, Δn3, Δn4, Δn5, Δn6 of zero is set for normal operation.

6. Method for controlling a reversing gear unit according to any one of claims 1 to 5, characterised in that the frictional load can be specifically distributed between the shift elements (2, 3, 5, 6) by setting a desired value deviating from zero for the difference in the differential speeds Δn2, Δn3, Δn5, Δn6.

7. Method for controlling a reversing gear unit according to any one of claims 1 to 6, characterised in that a time-dependent, ramp-shaped characteristic of the pressure at the additionally slipping shift element (5, 6) of the downstream gear group (4) can be predetermined.

## Revendications

1. Procédé pour la commande d'une boîte d'inversion pour engins de chantier dans lequel la boîte d'inversion comporte un arbre d'entrée (8) et un arbre de sortie (15), au moins un élément de commande d'inversion (2) pour la marche avant et un élément de commande d'inversion (3) pour la marche arrière, ainsi qu'un groupe de vitesses (4) placé en aval, pouvant être commandé en charge, avec plusieurs éléments de commande (5, 6) affectés chacun à une vitesse,
caractérisé en ce que,
pour la réduction de la charge thermique des éléments de commande (2, 3, 5, 6) de la boîte d'inversion (1), les éléments de commande d'inversion (2, 3) sont commandés électriquement et/ou hydrauliquement par une unité de réglage et de commande (12) de telle façon que lors d'une opération de changement de vitesse, en plus d'un des éléments de commande d'inversion (2, 3), en fonction de l'opération de commande, au moins un autre élément de commande (5, 6) se trouvant dans le flux de puissance et étant fermé au début de l'inversion, appartenant au groupe de vitesses (4) placé en aval est commuté dans un état de frottement, respectivement de glissement, et une charge par friction se produisant de ce fait entre l'élément de commande d'inversion (2, 3) et l'autre élément de commande glissant (5, 6) est ainsi répartie.

2. Procédé pour la commande d'une boîte d'inversion selon la revendication 1, **caractérisé** en ce que les éléments de commande d'inversion (2, 3) et les éléments de commande (5, 6) du groupe de vitesses (4) placé en aval peuvent être mis sous pression pour l'opération de commande.

3. Procédé pour la commande d'une boîte d'inversion selon les revendications 1 et 2, **caractérisé** en ce que lors de l'opération de commande, la pression sur les éléments de commande d'inversion (2, 3) est réglable au moyen d'une partie commandée et réglée.

4. Procédé pour la commande d'une boîte d'inversion selon l'une des revendications 1 à 3, **caractérisé** en ce que la différence des vitesses de rotation différentielles Δn2, Δn3, Δn5, Δn6 d'un des éléments de commande d'inversion (2, 3) et de l'élément de commande (5, 6) du groupe de vitesses (4) placé en aval commuté en plus dans l'état de glissement sert comme grandeur de réglage pour la part réglée de la pression.

5. Procédé pour la commande d'une boîte d'inversion selon la revendication 4, **caractérisé** en ce que pour un fonctionnement normal, une valeur de consigne nulle des vitesses de rotation différentielles est réglée pour la différence des vitesses de rotation différentielles Δn2, Δn3, Δn4, Δn5, Δn6.

6. Procédé pour la commande d'une boîte d'inversion selon l'une des revendications 1 à 5, **caractérisé** en ce qu'au moyen du réglage d'une valeur de consigne différente de zéro pour la différence des vitesses de rotation différentielles Δn2, Δn3, Δn5, Δn6, la charge par friction peut être répartie de façon ponctuelle entre les éléments de commande (2, 3, 5, 6).

7. Procédé pour la commande d'une boîte d'inversion selon l'une des revendications 1 à 6, **caractérisé** en ce qu'une variation linéaire de la pression en fonction du temps peut être déterminée sur l'élément de commande (5, 6) glissant supplémentaire du groupe de vitesses placé en aval (4).
